# EUROPEAN PATENT APPLICATION

(11) **EP 3 299 662 A1**
(43) Date of publication of application: **28.03.2018**
(21) Application number: 15892442.3
(22) Date of filing: 24.11.2015
(51) Int. Cl.: F16F 1/373, F16F 9/04

(54) **NONLINEAR AUXILIARY SPRING, BELTED CAPSULE AND AIR SPRING**

(30) Priority: 19.05.2015 CN 201510256840; 04.08.2015 CN 201510471197
(71) Applicant: CRRC Qingdao Sifang Rolling Stock Research Institute Co., Ltd., Qingdao, Shandong 266112 (CN)
(72) Inventor: LI, Xuebing, Shandong 266112 (CN); LIU, Wanqiang, Shandong 266112 (CN); LIU, Zhipo, Shandong 266112 (CN); ZHANG, Sujun, Shandong 266112 (CN); WANG, Fusheng, Shandong 266112 (CN); LIU, Zhaodong, Shandong 266112 (CN); LIU, Zhiguo, Shandong 266112 (CN); SONG, Hongguang, Shandong 266112 (CN); ZHANG, Bo, Shandong 266112 (CN); TIAN, Qingshuai, Shandong 266112 (CN); ZHANG, Guangquan, Shandong 266112 (CN)
(74) Representative: Patentanwälte Bals & Vogel
(86) International application number: PCT/CN2015/095442
(87) International publication number: WO 2016/184068

(57) **Abstract**

An auxiliary spring, a new-belted diaphragm and an air spring, wherein the air spring comprises an auxiliary spring and a new-belted diaphragm arranged above the auxiliary spring, the auxiliary spring comprises a rim (1), a rubber piece (2) with an edge that is of a tilted axiolitic structure and a base plate (3), the rim (1) is of a reversed convex structure and has a downward support column on a bottom surface; a concave hole at a center of the rubber piece (2) encloses the whole support column, a top of the rubber piece (2) contacts with a concave bottom surface of the rim (1); the new-belted diaphragm comprises a top cover (41) and a diaphragmbody (42); the diaphragm body (42) is of a hollow structure and is installed below the top cover (41); a top of the diaphragm body (42) is an annular opening, and a middle vertical portion thereof is a girdle portion; the top of the diaphragm body (42) is connected with the top cover (41) by a connector (44); a top surface of the rim (1) is projected upward to form a positioning protrusion (751); a top surface of the positioning protrusion (751) is fixedly provided with a friction plate (52) that forms a first gap E with the top cover (41).

## Description

### TECHNICAL FIELD

The present invention relates to a component manufacturing technology of a railway vehicle, in particular to a nonlinear auxiliary spring, a new-belted diaphragm and an air spring.

### BACKGROUND

An air spring, which is installed between a car body and a bogie, can act as an anti-vibration component to reduce impact that the car body suffered due to rail irregularity.

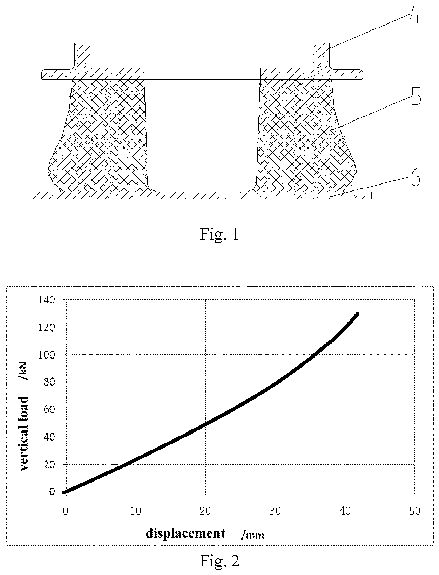

An hourglass auxiliary spring, due to its low vertical stiffness and low transversal stiffness, finds a wide application in a railway vehicle, but on the other hand, the small vertical stiffness will lead to undue relative deflection of the hourglass auxiliary spring under tare load to heavy load, which will cause sinkage of the car body and damages to other components. A conventional hourglass auxiliary spring with a structure as shown in FIG. 1, has a near linear load-displacement curve, as shown in FIG. 2, has a large deflection difference between tare load and heavy load, and thus is prone to cause sinkage of the car body and damage to other components.

The Chinese patent application No. 201320710584.2 discloses a nonlinear rubber auxiliary spring for railway transport, including a spring body and a reinforcement; the spring body is of a hollow structure, and the reinforcement is arranged in the hollow structure of the body; the spring body includes a big rubber piece, a big upper end plate arranged at an upper end of the big rubber piece, and a big lower end plate arranged at a lower end of the big rubber piece, wherein the big rubber piece, the big upper end plate and the big lower end plate are integrated by vulcanization; the reinforcement includes a small rubber piece, a friction plate arranged at the upper end of the small rubber piece, and a lower plate arranged at the lower end of the small rubber piece, wherein the small rubber piece, the friction plate and the lower plate are integrated via vulcanization. And the arrangement of the built-in reinforcement achieves vertical nonlinearity and great stiffness of the auxiliary spring solves the problem of nonlinearity and great stiffness of the auxiliary spring vertical, and at the same time there is a friction problem between the small rubber piece and the upper end plate.

### SUMMARY

A first aspect of the present invention provides a nonlinear auxiliary spring, including a rim, a rubber piece and a base plate, wherein the rim is of a reversed convex structure, a bottom surface of the rim is provided with a downward support column, and the bottom surface of the seat is a concave surface; a center of the rubber piece is provided with a concave hole matched with the support column, through the concave hole the rubber piece encloses the whole support column, an edge of the rubber piece is a tilted axiolitic structure, and a top of the rubber piece is in contact with the concave surface of the rim.

Another aspect of the present invention provides a new-belted diaphragm, including a top plate and a diaphragm body installed beneath the top plate, wherein a middle vertical portion of the diaphragm body is a girdle portion, the diaphragm body is of a hollow-structure and forms an annular opening at the top thereof; the new-belted diaphragm further includes a connector connecting the diaphragm body and the top plate, the top of the diaphragm body is connected with the connector, the conncetor is connected with the top plate; and the diaphragm body comprises a section of belt structure.

Yet another aspect of the present invention provides an air spring, including an auxiliary spring and a new-belted diaphragm arranged above the auxiliary spring, wherein:
the auxiliary spring includes a rim, a rubber piece and a base plate, wherein, the rim is of a reversed convex structure, a bottom surface of the rim is provided with a downward support column, and the bottom surface of the rim is a concave surface; a center of the rubber piece is provided with a concave hole matched with the support column, through the concave hole the rubber piece encloses the whole support column, an edge of the rubber piece is a tilted axiolitic structure, and a top of the rubber piece is in contact with the concave surface of the rim;
the new-belted diaphragm includes a top plate, and a diaphragm body installed beneath the top plate, wherein a middle vertical portion of the diaphragm body is a girdle portion, the diaphragm body is of a hollow-structure and forms an annular opening at the top thereof, characterized in that the new-belted diaphragm further includes a connector connecting the diaphragm body and the top plate, the top of the diaphragm body is connected with the connector, the connector is connected with the top plate; and the diaphragm body comprises a section of belt structure;
A top surface of the rim is projected upward to form a positioning protrusion, a top surface of the positioning protrusion is fixedly provided with a friction plate, and a first gap is formed between the friction plate and the top plate.

Specifically, in the aforementioned air spring, the support column includes a support convex part formed on a bottom surface of the rim and a support cover buckled on the support convex part, and the support cover is fixed to the support convex part via a fastener. Preferably, a second gap is formed between a bottom surface of the support column and the base plate.

Further, along the edge of the annular opening at the top of the diaphragm body, there is a hook-like structure facing towards an inner side or outer side of the annular opening; the connector includes a hook-like portion hooked to the hook-like structure at the top of the diaphragm body, and further includes a connecting portion, which is in close contact with the top plate and is fixedly connected to the top plate via a fastener.

Furthermore, the belt structure is located at the girdle portion of the diaphragm body. In addition, the belt structure includes an upper end, a middle portion and a lower end, wherein the middle portion has a greater thickness than the upper end and the lower end, and the belt structure has a thickness that is transitioned smoothly from the top down.

Optionally, the belt structure is composed of multiple belt layers with a high strength skeleton.

The nonlinear auxiliary spring provided by the present invention is able to significantly improve compression nonlinearity of an auxiliary spring, address the problem of too large deflection difference of a conventional auxiliary spring under heavy load and no-load, and is simple in structure and low in cost.

According to the new-belted diaphragm provided by the present invention, a belt structure is employed to replace a steel wire girdle structure commonly used in the prior art, thereby reducing total mass of an air spring, to facilitate light weight of the air spring, while reducing difficulty in manufacturing; a material identical with (or similar to) that of a ply layer of the diaphragm body may be adopted as a belt layer, the belt layer has a gradually transited thickness, thus efficiently solve the problem of stress concentration at both ends of the steel wire girdle belt of a steel wire belted air spring; furthermore, a fastening-type upper bead of a fastener is used to reduce contact area between the diaphragm with other components, thereby greatly reducing horizontal hysteresis, which is favorable to restore a central position after the air spring undergoes a large horizontal displacement. At the same time the reduced contact area between the diaphragm and other components makes it not easy to produce wear of the diaphragm when the air spring undergoes frequently a large horizontal displacement.

According to the air spring provided by the present invention, the diaphragm is provided with a belt layer, which can limit the maximum outer diameter of the capsule, and the auxiliary spring realizes super nonlinear vertical load-displacement relationship via rigid stop function and the rim structure; and the bottom surface of the rim of the auxiliary spring has a matching geometry with the edge of the rubber piece, which can achieve contact between the rubber piece of the auxiliary spring and the rim as the load increases and achieve such characteristic that there is small stiffness under no load and dramatically increased stiffness under a heavy load. In this way, a low derailment coefficient of a vehicle under no-load condition is ensured, and a vertical displacement difference of the vehicle under a heavy load relative to no load is limited. In a deflated condition, the rim is in contact with a lower flat surface of the top plate of the air spring by the friction plate and can slide relative to the lower flat surface, thus guaranteeing that a great wheel-rail force will not be generated when the vehicle is passing through a curve under the deflated condition; and in an inflated condition, the first gap E is present, which can guarantee that no collision will occur between the top plate and the friction plate when the vehicle is running in a normal state, and thus guarantee a comfortable travel in the vehicle.

### BRIEF DESCRIPTION OF THE DRAWINGS

FIG. 1 is a structural diagram of a hourglass auxiliary spring in the prior art;
FIG. 2 is a compression curve of a conventional hourglass auxiliary spring;
FIG. 3 is a structural diagram of a nonlinear auxiliary spring according to the present invention;
FIG. 4 is a compression curve of a nonlinear auxiliary spring according to the present invention;
FIG. 5 is a structural diagram of a diaphragm body in one embodiment of a new-belted diaphragm of the present invention;
FIG. 6 is a cross-sectional structural diagram after installation of an air spring adopting a new-belted diaphragm according to one embodiment of the present invention;
FIG. 7 is a structural diagram of the belt structure shown in FIG. 5;
FIG. 8 is a structural diagram of one embodiment of the air spring of the present invention;
FIG. 9 is a diagram comparing a horizontal hysteresis curve of one embodiment of the air spring of the present invention with that of a steel wire belted air spring in the prior art;
FIG. 10 is a diagram comparing a load-displacement curve of one embodiment of the air spring of the present invention with that of a hourglass auxiliary spring in the prior art.

### DETAILED DESCRIPTION

### Embodiment 1

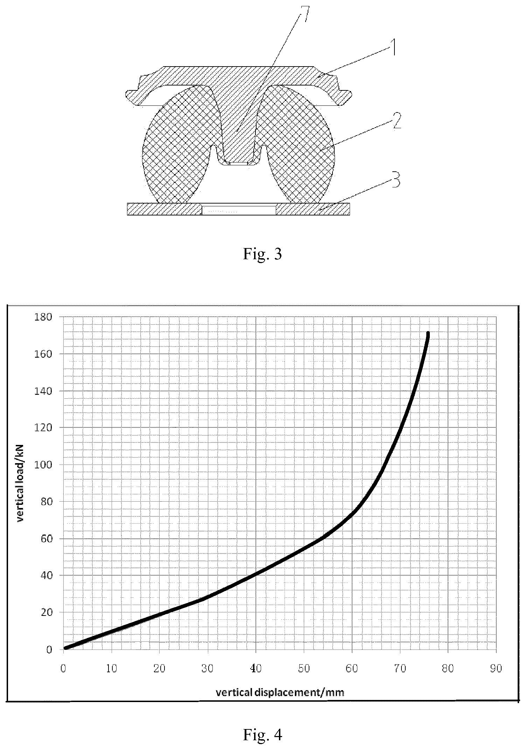

As shown in FIG. 3, a nonlinear auxiliary spring of this embodiment includes a rim 1, a rubber piece 2 and a base plate 3, wherein the rim 1 is of a reversed convex structure, a bottom surface of the rim 1 is provided with a downward support column 7, and the bottom surface of the rim 1 is a concave surface; a center of the rubber piece 2 is provided with a concave hole matched with the support column 7, through the concave hole the rubber piece 2 encloses the whole support column 7, an edge of the rubber piece 2 is a tilted axiolitic structure, and a top of the rubber piece 2 is in contact with the concave surface of the rim 1.

### Embodiment 2

The nonlinear auxiliary spring of this embodiment is the same as that of embodiment 1 except for the following distinctions:
the edge of the concave surface of the rim 1 is arc-shaped, and when in compression under a heavy load, contact between the rubber piece 2 and the rim 1 changes from linear contact to surface contact, and the arc-shaped edge of the rim 1 is able to be completely fitted with the rubber piece 2; the rim 1 and the rubber piece 2 are integrated via the support column 7 and the concave hole by vulcanization. That is, when a load imposed on the nonlinear auxiliary spring gradually increases, the rim 1 gradually moves towards the base plate 3, allowing the arc-shaped edge of the rim 1 to be gradually fitted with the rubber piece 2, and finally allowing the arc-shaped edge of the rim 1 to be completed fitted with the rubber piece 2.

### Embodiment 3

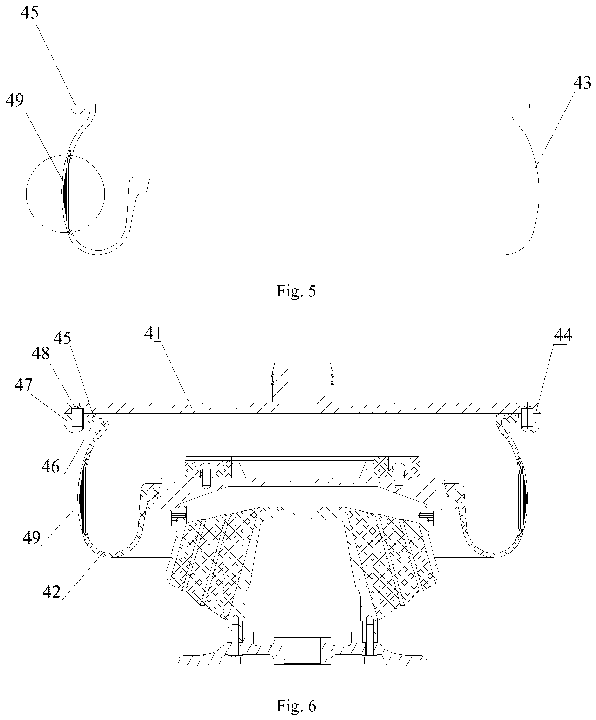

As shown in FIG. 5 and FIG. 6, a new-belted diaphragm includes a top plate 41 and a diaphragm body 42, wherein the diaphragm body 42 is installed beneath the top plate 41, and a middle vertical portion of the diaphragm body 42 is a girdle portion 43.

As shown in FIG. 6, the diaphragm body 42 is connected with the top plate via a connector 44. The diaphragm body 42 is of a hollow structure and forms an annular opening at the top thereof. The air spring further includes the connector 44 connecting the diaphragm body 42 and the top plate 41; the top of the diaphragm body 42 is connected with the connector 44, the connector 44 is connected with the top plate 41.

Along the edge of the annular opening at the top of the diaphragm body 42, there is a hook-like structure 45 facing towards an outer side of the annular opening. The connector 44 includes a hook-like portion 46 facing towards an inner side of the annular opening, ensuring that the hook-like portion 46 to be hooked to the hook-like structure 45 at the top of the diaphragm body 42. The connector 44 further includes a connecting portion 47, which is in close contact with the top plate 41 and fixedly connected to the top plate 41 via a fastener 48.

The diaphragm body 42 includes a section of belt structure 49, which is located at a girdle portion 43 of the diaphragm body 42. As demanded by working conditions, during designing, a specific design position of the diaphragm body 42 can be adjusted up and down.

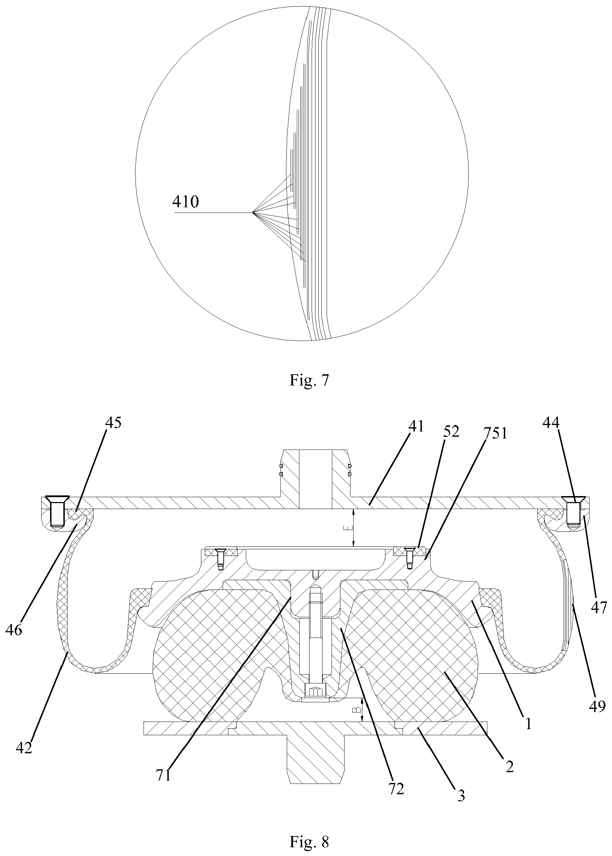

As shown in FIG. 7, the belt structure 49 is composed of multiple belt layers 410 with a high strength skeleton, and includes an upper end, a middle portion and a lower end, wherein the middle portion has a greater thickness than the upper end and the lower end, and the belt structure 49 has a thickness that is transitioned smoothly from the top down. By adopting such structure, a force is mainly concentrated on the middle portion of the belt structure 49 during operation of the air spring. The thickness of each of the belt layers can be designed according to different application situations of the air spring.

The belt structure 49 adopts a material identical with (or similar to) that of the diaphragm body 42, and during processing, the belt structure 49 can be directly processed to be integrated with the diaphragm body 42.

A steel wire belted air spring and a new-belted air spring are used to carry out the following tests for verification.

Test 1: a steel wire belted diaphragm and a new-belted diaphragm having the same effective diameter are taken to conduct pressure tests under the same working conditions. The steel wire belted diaphragm has a maximum stress of 2.2Mpa at both ends of the girdle, while the new-belted diaphragm has a maximum stress of 0.9Mpa. It can be seen that the new-belted diaphragm has a much smaller stress than the both ends of the steel wire belted capsule, and therefore has improved safety.

Test 2: a steel wire belted diaphragm and a new-belted diaphragm are subjected to a load internal pressure test, and when obtaining the same effective diameter (∅530mm), the weight of steel wire belted air spring is 10.5Kg, while the weight of new-belted diaphragm is only 6.8Kg.

Test 3: a steel wire belted diaphragm and a new-belted diaphragm, which have the same effective diameter, are taken to form air springs with the same auxiliary spring, through assembly, and conduct fatigue tests under the same working conditions (at an internal pressure of 500kPa, and a horizontal amplitude of +/-60mm), and it is found that for the steel wire belted capsule, abrasion starts to emerge in the contact area between the diaphragm and the top plate after 300,000 times, and the abrasion becomes serious after 600,000 times, while for the new-belted diaphragm, there is no abrasion after 600,000 times.

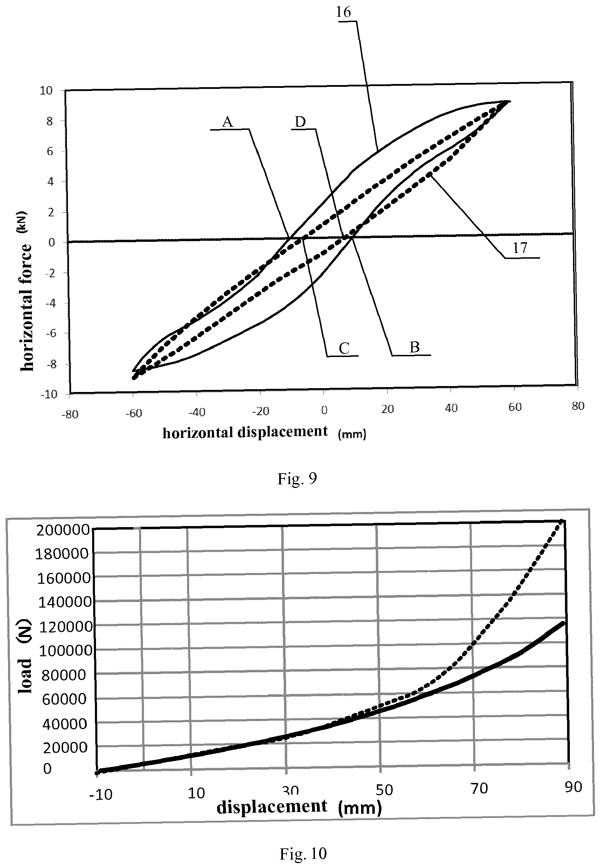

Test 4: a steel wire belted diaphragm and a new belted diaphragm, which have the same effective diameter, are taken to form air springs with the same auxiliary spring, through assembly, and conduct horizontal load-displacement relationship experiments under the same working conditions (at an internal pressure of 500kPa, and a horizontal amplitude of +/-60mm) to obtain hysteresis curves of them, as shown in FIG. 9. In the figure, curve 16 is a hysteresis curve of the steel wire belted air spring, and point A and point B are two intersection points of the hysteresis curve of the steel wire belted air spring and the x axis. It can be seen from the figure that, the spacing between A and B is about 20mm. The curve 17 is a hysteresis curve of the new-belted air spring, and in the figure, point C and point D are two intersection points of the hysteresis curve of the new-belted air spring and the x axis. It can be seen from the figure that, the spacing between C and D is about 12mm.

It can be seen from test 4 that, the horizontal hysteresis of the steel wire belted air spring is apparently greater than that of the new-belted diaphragm, and thus the restoring performance of the steel wire belted air spring is poorer than that of the new-belted air spring.

### Embodiment 4

Unlike Embodiment 1, the belt structure 49 that is composed of multiple belt layers 410 with a high strength skeleton is a structure with a uniform thickness from the top down.

### Embodiment 5

Unlike Embodiment 3 and Embodiment 4, along the edge of the annular opening at the top of the diaphragm body 42, there is a hook-like structure 45 facing towards an inner side of the annular opening; and the hook-like portion 46 of the connector 44 faces towards an outer side of the annular opening, which may guarantee the hook-like portion 46 to be hooked to the hook-like structure 45 at the top of the diaphragm body 42.

### Embodiment 6

Referring to FIG. 3, FIG. 5, FIG. 6, FIG. 7 and FIG. 8, this embodiment provides an air spring, including: an auxiliary spring and a new-belted diaphragm arranged above the auxiliary spring, wherein the auxiliary spring includes a rim 1, a rubber piece 2 and a base plate 3, wherein the rim 1 is of a reversed convex structure, a bottom surface of the rim 1 is provided with a downward support column, and the bottom surface of the rim 1 is a concave surface; a center of the rubber piece 2 is provided with a concave hole matched with the support column, through the concave hole the rubber piece 2 encloses the whole support column, an edge of the rubber piece 2 is a tilted axiolitic structure, and a top of the rubber piece 2 is in contact with the concave surface of the rim 1; the new-belted diaphragm includes a top plate 41 and a diaphragm body 42, wherein the diaphragm body 42 is installed beneath the top plate 41, a middle vertical portion of the diaphragm body 42 is a girdle portion 43; the diaphragm body 42 is of a hollow-structure and forms an annular opening at the top thereof. The air spring further includes a connector 44 connecting the diaphragm body 42 and the top plate 41; a top of the diaphragm body 42 is connected with the connector 44, the connector 44 is connected with the top plate 41; a top surface of the rim 1 is projected upward to form a positioning protrusion 751, a top surface of the positioning protrusion 751 is fixedly provided with a friction plate 52, and a first gap E is formed between the friction plate 52 and the top plate 41.

Wherein, the friction plate 52 may be a non-metallic material with a friction coefficient smaller than that of the rim 1, and may be installed onto the rim 1 through a screw.

By providing a belt layer 49 on the capsule, the maximum outer diameter of the diaphragm body 42 can be limited, and the auxiliary spring realizes super nonlinear vertical load-displacement relationship via rigid stop function and the rim structure; and by matching geometry of the bottom surface of the rim 1 with that of the edge of the rubber piece 2, it is possible to achieve contact between the rubber piece of the auxiliary spring and the rim as the load increases and achieve such characteristic that there is small stiffness under no load and dramatically increased stiffness under a heavy load. In this way, a low derailment coefficient of a vehicle under no-load condition is ensured, and a vertical displacement difference of the vehicle under a heavy load relative to no load is limited. In a deflated condition, the rim 1 is in contact with a lower flat surface of the top plate 41 of the air spring by the friction plate and can slide relative to the lower flat surface, thus guaranteeing that a great wheel-rail force will not be generated when the vehicle is passing through a curve under the deflated condition; and in an inflated condition, the first gap E is present, which can guarantee that no collision will occur between the top plate and the friction plate when the vehicle is running in a normal state, and thus guarantee a comfortable travel in the vehicle. It can be concluded from the above that, the air spring of this embodiment is especially suitable for the case where a vehicle travels along a curve with a quite small radius.

Specifically, the support column 7 may include a support convex part 71 formed on a bottom surface of the rim 1 and a support cover 72 buckled on the support convex part 71, and the support cover 72 is fixed to the support convex part 71 via a fastener. A second gap B is formed between the bottom surface of the support column and the base plate, wherein B is a maximum sinkage of the car body of a vehicle relative to a bogie in any case.

Along the edge of the annular opening at the top of the diaphragm body 42, there is a hook-like structure 45 facing towards an outer side of the annular opening. The connector 44 includes a hook-like portion 46 facing towards an inner side of the annular opening, which can guarantee the hook-like portion 46 to be hooked to the hook-like structure 45 at the top of the diaphragm body 42; and the connector 44 further includes a connecting portion 47, which is in close contact with the top plate 41 and is fixedly connected to the top plate 41 via a fastener 48.

The diaphragm body 42 includes a section of a belt structure 49, which is located at a girdle portion 43 of the diaphragm body 42, and as demanded by working conditions, during designing, the specific design position of the diaphragm body 42 can be adjusted up and down.

Referring to FIG. 7, the belt structure 49 is composed of multiple belt layers 410 with a high strength skeleton, and includes an upper end, a middle portion and a lower end, wherein the middle portion has a greater thickness than the upper end and the lower end, and the belt structure 49 has a thickness that is transitioned smoothly from the top down. By adopting such structure, a force is mainly concentrated on the middle portion of the belt structure 49 during operation of the air spring. The thickness of each of the belt layers can be designed according to different application situations of the air spring.

The belt structure 49 adopts a material identical with (or similar to) that of the diaphragm body 42, and during processing, the belt structure 49 can be directly processed to be integrated with the diaphragm body 42. FIG. 9 is a diagram comparing a horizontal hysteresis curve of one embodiment of an air spring of the present invention with that of a steel wire belted air spring in the prior art, wherein, the solid line is a horizontal hysteresis curve of the steel wire belted air spring in the prior art, and the dashed line is a horizontal hysteresis curve of the air spring in this embodiment. As shown in FIG. 9, horizontal load-displacement relationship experiments conducted by using the air spring of this embodiment of the present invention and other steel wire belted air spring with the same performance under the same working conditions (at an internal pressure of 500kPa, and a horizontal amplitude of +/-60mm) show that the horizontal hysteresis of the steel wire belted air spring is apparently greater than that of the air spring of the present invention.

FIG. 10 is a diagram comparing a load-displacement curve of one embodiment of the air spring of the present invention with that of a hourglass auxiliary spring in the prior art, wherein the solid line is a load-displacement curve of the hourglass auxiliary spring in the prior art, and the dashed line is a load-displacement curve of an auxiliary spring of the air spring in the present invention.

As shown in FIG. 10, in the air spring in this embodiment of the present invention, the optimal design of the structure of the rim enables the contact area between the rubber piece and the rim to increase instantly, thereby allowing the load at a certain value (it is 60kN in FIG. 10) to be increased abruptly, thus increasing the nonlinearity of the air spring. Therefore, the deflection difference between under no load and under a heavy load is reduced, thereby avoiding damage to other components caused by sinkage of the vehicle.

Finally, it should be noted that, the above embodiments are merely intended to illustrate rather than limit the technical solutions of the present invention; and although the present invention has been described in detail with reference to the above embodiments, one with ordinary skill in the art shall understand that modifications can still be made to the technical solutions recorded in the foregoing embodiments, or equivalent replacements can be made to part or all of the technical features therein; these modifications or replacements shall not make the essence of the corresponding technical solutions depart from the scope of the technical solutions of the above embodiments of the present invention.

## Claims

1. A nonlinear auxiliary spring, comprising a rim, a rubber piece and a base plate, wherein the rim is of a reversed convex structure, a bottom surface of the rim is provided with a downward support column, and the bottom surface of the rim is a concave surface; a center of the rubber piece is provided with a concave hole matched with the support column, through the concave hole the rubber piece encloses the whole support column, an edge of the rubber piece is a tilted axiolitic structure, and a top of the rubber piece is in contact with the concave surface of the rim.

2. The nonlinear auxiliary spring in accordance with claim 1, wherein an edge of the concave surface is arc-shaped.

3. The nonlinear auxiliary spring in accordance with claim 1 or 2, wherein the rim and the rubber piece are integrated via the support column and the concave hole by vulcanization.

4. A new-belted diaphragm, comprising a top plate and a diaphragm body, wherein the diaphragm body is installed beneath the top plate, a middle vertical portion of the diaphragm body is a girdle portion, the diaphragm body is of a hollow-structure and forms an annular opening at the top thereof, wherein the new-belted diaphragm further comprises a connector connecting the diaphragm body and the top plate; the top of the diaphragm body is connected with the connector, and the connector is connected with the top plate; and the diaphragm body comprises a section of belt structure.

5. The new-belted diaphragm in accordance with claim 4, wherein along an edge of the annular opening at the top of the diaphragm body, there is a hook-like structure facing towards an inner side or outer side of the annular opening; the connector comprises a hook-like portion hooked to the hook-like structure at the top of the diaphragm body, and further comprises a connecting portion, which is in close contact with the top plate and fixedly connected to the top plate via a fastener.

6. The new-belted diaphragm in accordance with claim 4, wherein the belt structure is located at the girdle portion of the diaphragm body.

7. The new-belted diaphragm in accordance with claim 4, wherein the belt structure comprises an upper end, a middle portion and a lower end, wherein the middle portion has a greater thickness than the upper end and the lower end, and the belt structure has a width that is transitioned smoothly from the top down.

8. The new-belted diaphragm in accordance with claim 4, wherein the belt structure is composed of multiple belt layers with a high strength skeleton.

9. An air spring, comprising: an auxiliary spring and a new-belted diaphragm arranged above the auxiliary spring, wherein,
the auxiliary spring comprises a rim, a rubber piece and a base plate, wherein the rim is of a reversed convex structure, a bottom surface of the rim is provided with a downward support column, and the bottom surface of the rim is a concave surface; a center of the rubber piece is provided with a concave hole matched with the support column, through the concave hole the rubber piece encloses the whole support column, an edge of the rubber piece is a tilted axiolitic structure, and a top of the rubber piece is in contact with the concave surface of the rim;
the new-belted diaphragm comprises a top plate and a diaphragm body, wherein the diaphragm body is installed beneath the top plate, a middle vertical portion of the diaphragm body is a girdle portion, the diaphragm body is of a hollow-structure and forms an annular opening at the top thereof, wherein the new-belted diaphragm further comprises a connector connecting the diaphragm body and the top plate; the top of the diaphragm body is connected with the connector, and the connector is connected with the top plate; and the diaphragm body comprises a section of belt structure; and
a top surface of the rim is projected upward to form a positioning protrusion, a top surface of the positioning protrusion is fixedly provided with a friction plate, and a first gap is formed between the friction plate and the top plate.

10. The air spring in accordance with claim 9, wherein the support column comprises a support convex part formed on the bottom surface of the rim and a support cover buckled on the support convex part, and the support cover is fixed to the support convex part via a fastener.

11. The air spring in accordance with claim 10, wherein a second gap is formed between a bottom surface of the support column and the base plate.

12. The air spring in accordance with any one of claims 8-10, wherein along an edge of the annular opening at the top of the diaphragm body, there is a hook-like structure facing towards an inner side or outer side of the annular opening; the connector comprises a hook-like portion hooked to the hook-like structure at the top of the diaphragm body, and further comprises a connecting portion, which is in close contact with the top plate and fixedly connected to the top plate via a fastener.

13. The air spring in accordance with any one of claims 8-10, wherein the belt structure is located at the girdle portion of the diaphragm body.

14. The air spring in accordance with any one of claims 8-10, wherein the belt structure comprises an upper end, a middle portion and a lower end, wherein the middle portion has a greater thickness than the upper end and the lower end, and the belt structure has a thickness that is transitioned smoothly from the top down.

15. The air spring in accordance with any one of claims 8-10, wherein the belt structure is composed of multiple belt layers with a high strength skeleton.

16. The air spring in accordance with any one of claims 8-10, wherein an edge of the concave surface of the rim is arc-shaped.

17. The air spring in accordance with any one of claims 8-10, wherein the rim and the rubber piece are integrated via the support column and the concave hole by vulcanization.
